# FASCICULE DE BREVET EUROPEEN

(11) **EP 2 680 380 B1**
(45) Date de publication et mention de la délivrance du brevet: **06.01.2016**
(21) Numéro de dépôt: 13305454.4
(22) Date de dépôt: 08.04.2013
(51) Int. Cl.: H02B 1/20, H01R 9/26

(54) **Procédé de fabrication d'un dispositif de raccordement électrique de bornes appartenant à des appareils modulaires montés sur un support de montage et dispositif obtenu selon ce procédé**
Fertigungsverfahren einer elektrischen Verbindunganordnung für Anschlüsse von auf einem Träger montierten modularen Schaltgeräte und entsprechende Anordnung
Method for manufacturing an electric connection device of the terminals belonging to modular apparatuses fitted on a mounting support and device obtained according to this method

(30) Priorité: 28.06.2012 FR 1256149
(43) Date de publication de la demande: 01.01.2014
(73) Titulaire: Schneider Electric Industries SAS, 92500 Rueil-Malmaison (FR)
(72) Inventeur: Marmey, Gilbert, 38050 GRENOBLE Cedex 09 (FR)
(74) Mandataire: Colette, Marie-Françoise

(56) Documents cités:
- WO-A1-00/62386
- DE-A1- 2 600 795

## Description

La présente invention concerne un procédé de fabrication d'un dispositif de raccordement électrique des bornes appartenant à des appareils modulaires montés sur un support de montage.

On connaît le document DE 26 00 795 décrivant un dispositif de raccordement électrique des bornes au moyen de conducteurs souples reliés électriquement aux bornes au moyen de cosses.

Afin de réaliser un tel raccordement électrique, on connaît également la solution consistant à réaliser des ponts individuels au moyen de fils souples. Ces ponts sont coupés à la bonne longueur en déroulant un rouleau de fil souple. Puis, les extrémités de ces ponts sont dénudées pour réaliser les connexions. Puis, des embouts de câblage sont rapportés sur les extrémités dénudées, après quoi ces embouts sont introduits dans les ouvertures des bornes. Ainsi, chacune des bornes reçoit deux embouts appartenant à deux ponts successifs, d'où il résulte que le temps nécessaire pour réaliser la connexion est particulièrement long.

On connait également la solution consistant à réaliser des ponts individuels en fil rigide. Le mode de réalisation de ces ponts est le même que celui précédemment décrit utilisant des fils souples, à ceci près que les embouts de câblage ne sont pas nécessaires car les extrémités rigides dénudées peuvent constituer elles-mêmes les connexions.

De même que dans la réalisation précédente, chacune des bornes reçoit deux embouts appartenant à deux ponts successifs.

On connaît également la réalisation consistant à utiliser des peignes rigides.

Un tel peigne est décrit dans le document FR 2 693 318 décrivant une barrette constituée d'une bande conductrice découpée ayant la forme d'un peigne dont les dents constituent des cosses servant au pontage des appareils, cette bande étant enrobée dans une enveloppe en matière plastique isolante, laissant à nu les extrémités des cosses de connexion. Cette bande forme une pluralité de segments, lesquels segments sont réunis latéralement à l'aide des cosses qui constituent des pontages entre lesdits segments.

Selon cette réalisation, il est nécessaire de découper le peigne pour adapter sa longueur au nombre d'appareils modulaires à raccorder.

On observe également que les bornes des appareils modulaires disposés sur un rail DIN d'une grande longueur ne sont pas parfaitement alignées, compte-tenu des tolérances industrielles de fabrication. Il en résulte qu'il y a des contraintes mécaniques importantes pour faire entrer les dents du peigne dans les bornes, ainsi que des contraintes de serrage des vis des bornes car les dents ne sont pas parfaitement dans l'axe de serrage des bornes.

De plus, les peignes ne sont pas toujours utilisables en fonction des types calibres et variantes des disjoncteurs et des auxiliaires ajoutés sur le côté des disjoncteurs.

La présente invention résout ces problèmes et propose un dispositif de raccordement entre elles des bornes appartenant à des appareils modulaires montées sur un support de montage, ledit dispositif pouvant être préfabriqué en usine et amené à la longueur souhaitée sans outil, et permettant l'obtention d' un raccordement rapide et fiable, sans qu'il soit nécessaire d'exercer de contraintes lors du raccordement.

A cet effet, la présente invention a pour objet un procédé de fabrication du genre précédemment mentionné, ce procédé étant caractérisé en ce qu'il consiste à :
- prendre une longueur prédéterminée dite première d'un conducteur souple ou semi-rigide,
- puis à créer à intervalles réguliers le long de ce conducteur souple ou semi-rigide, des parties dénudées présentant une certaine longueur dite seconde,
- puis à réaliser un pliage dudit conducteur en des zones correspondant sensiblement au milieu des parties dénudées en superposant les deux portions situées de part et d'autre de chaque zone de pliage de manière à former une succession de ponts,
- puis à solidariser mécaniquement de manière amovible et relier électriquement les deux portions en regard situées de part et d'autre de chaque zone de pliage de manière à former des éléments de connexion aptes à être introduits chacun dans une borne des appareils de manière à réaliser le raccordement électrique de tous les appareils entre eux.

Selon une caractéristique particulière, l'on désolidarise ensuite au moins une fois, sur la longueur du dispositif, deux portions en regard situées de part et d'autre de la zone de pliage située entre deux ponts, de manière à réaliser plusieurs segments constitués chacun d'un ou plusieurs ponts, le nombre de ponts correspondant pour chaque segment au nombre d'appareils à relier.

Selon une autre caractéristique, la désolidarisation mécanique précitée est réalisée par l'intermédiaire de moyens de désolidarisation actionnables manuellement.

Selon une autre caractéristique, les portions en regard associées à chaque zone de pliage, sont fixées à un élément de connexion, les deux éléments de connexion en regard de deux ponts successifs étant fixés l'un à l'autre de manière amovible et reliés électriquement.

Selon une caractéristique particulière, les deux éléments de connexion précités sont fixés l'un à l'autre par clipsage ou bien encastrement.

Selon une autre caractéristique, les portions en regard associées à chaque zone de pliage sont fixées à l'élément de connexion correspondant par soudure ou sertissage.

Selon une réalisation particulière, le conducteur précité est réalisé en un fil semi-rigide, et le pliage des parties dénudées suivie de la superposition des portions dénudées situées de part et d'autre de la zone de pliage, permet de former au niveau de chaque zone de pliage, un élément de connexion rigide.

Avantageusement, le conducteur rigide précité est un fil de cuivre monobrin.

Selon une réalisation préférée, le conducteur précité est un conducteur souple, et après la création des parties dénudées, celles-ci sont compactées sensiblement perpendiculairement à leur direction longitudinale de manière à former, après le pliage destiné à former des ponts, des éléments de connexion rigide.

Selon une caractéristique particulière, les parties dénudées précitées sont sécables manuellement.

Selon une caractéristique particulière, ces parties dénudées comportent sensiblement au niveau de la zone de pliage, une zone fragilisée apte à faciliter la section par l'utilisateur, l'utilisateur procédant tout d'abord à un premier dépliage, suivi de plusieurs pliages et dépliages successifs jusqu'à la section du conducteur au niveau de la zone fragilisée.

Selon une caractéristique particulière, le conducteur précité est réalisé en un fil souple, et cette zone fragilisée est réalisée par une diminution de la section du conducteur au voisinage de la zone de pliage de la partie dénudée.

Selon une autre réalisation, le conducteur précité est réalisé en un fil rigide, et cette zone fragilisée est constituée par une entaille réalisée sensiblement au niveau de la zone de pliage de la partie dénudée.

Avantageusement, le conducteur précité est un câble ou une tresse.

La présente invention a encore pour objet un dispositif de raccordement électrique des bornes appartenant à des appareils modulaires montés sur un support de montage, ce dispositif étant caractérisé en ce qu'il est fabriqué par un procédé de fabrication comportant les caractéristiques précédemment mentionnées prises seules ou en combinaison.

La présente invention a encore pour objet un ensemble d'appareils de protection électriques modulaires montés sur un support de montage, cet ensemble étant caractérisé en ce que ces appareils sont raccordés électriquement au moyen d'un dispositif de raccordement comportant les caractéristiques précédemment mentionnées prises seules ou en combinaison.

Mais d'autres avantages et caractéristiques de l'invention apparaîtront mieux dans la description détaillée qui suit et se réfère aux dessins annexés donnés uniquement à titre d'exemple et dans lesquels :
- La figure 1 illustre une première étape du procédé de réalisation selon une réalisation particulière de l'invention consistant à dérouler un câble,
- La figure 2 illustre une seconde étape de ce procédé consistant à dénuder ce câble à intervalles régulier,
- La figure 3 illustre une troisième étape de ce procédé consistant à réaliser un compactage des parties dénudées,
- La figure 4 illustre une quatrième étape de ce procédé consistant à réaliser un pliage de manière à former des ponts,
- La figure 5 est une vue schématique de côté, illustrant un dispositif de raccordement selon une réalisation particulière de l'invention, après dénudage et réalisation d'une zone de fragilité sur les parties dénudées,
- La figure 6 illustre une étape qui suit la précédente et dans laquelle les parties dénudées ont été pliées et compactées,
- La figure 7 illustre une étape postérieure à la précédente dans laquelle l'un des ponts a été déplié afin d'être cassé et retiré du reste,
- La figure 8 illustre le retrait de ce pont,
- La figure 9 illustre la réalisation de plusieurs segments de pont par la méthode illustrée sur les figures 5 à 8,
- La figure 10 est une vue partielle de côté, illustrant une réalisation particulière des moyens de solidarisation amovibles de deux ponts successifs, et
- La figure 11 est une vue de côté illustrant un dispositif de raccordement réalisé suivant ce procédé.

Les figures illustrent la fabrication d'un dispositif de raccordement électrique 1 selon l'invention des bornes appartenant à plusieurs appareils électriques modulaires (non représentés) montés sur un rail de support tel un rail DIN, ces appareils pouvant être par exemple des interrupteurs ou disjoncteurs basse tension, ce dispositif étant plus communément appelé un peigne.

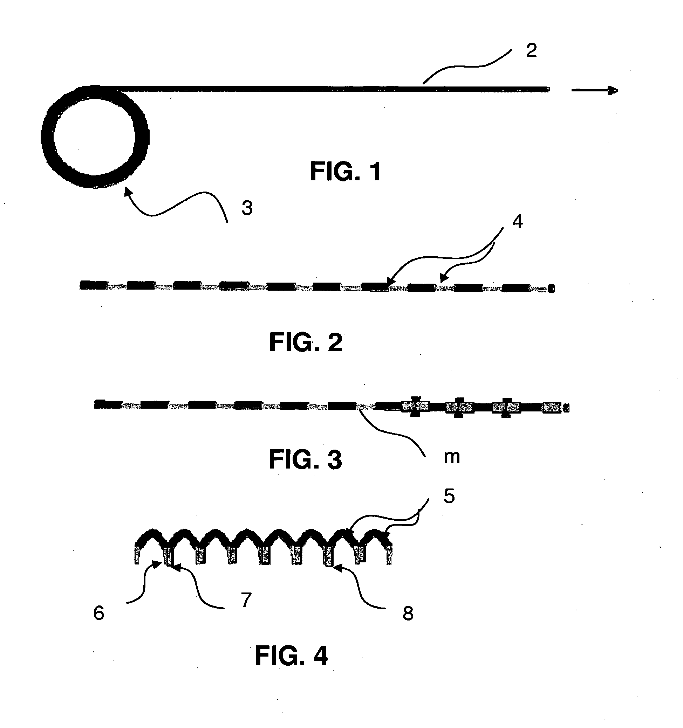

Les figures 1 à 4 illustrent les quatre étapes principales permettant la réalisation d'un tel dispositif de raccordement selon une première réalisation du procédé de fabrication selon l'invention.

Sur la figure 1, un câble 2 ou une tresse est déroulé à partir d'un rouleau 3 de câble souple. Puis, tel qu'illustré sur la figure 2, l'on crée des parties dénudées 4 à intervalles réguliers le long de la longueur du câble. Avantageusement, le fil est dénudé sur des portions espacées de quelques centimètres. Sur la figure 3, les parties dénudées 4 sont compactées de manière à rigidifier ces parties.

Sur la figure 4, l'on a réalisé un pliage de la bande ainsi réalisée sensiblement au milieu m des parties dénudées 4, de manière à former une succession de ponts 5 orientés tous dans le même sens, afin de superposer deux portions dénudées 6,7 situées de part et d'autre de cette zone de pliage m.

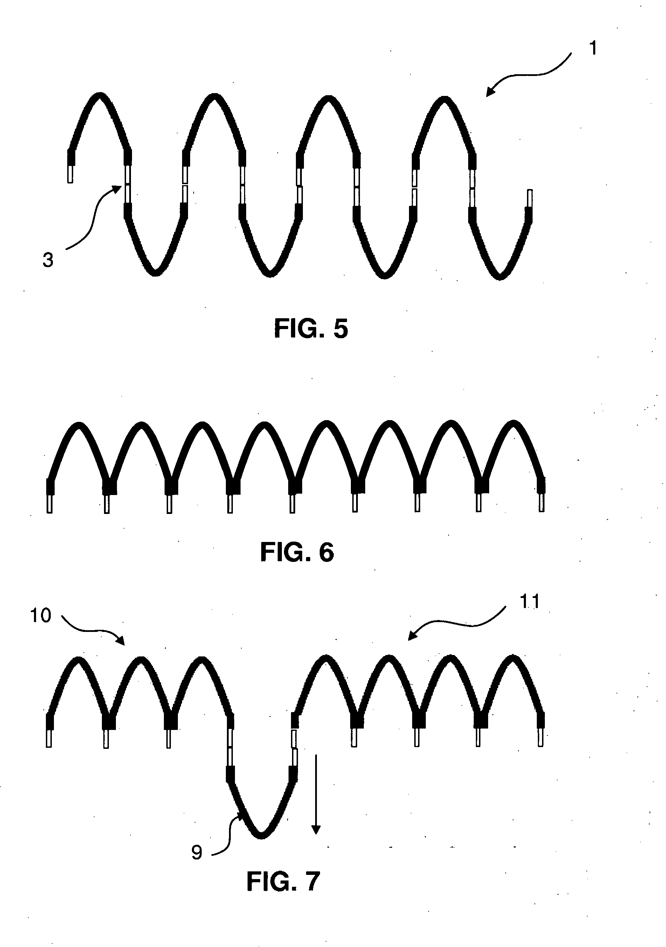

Grâce au compactage réalisé, ces portions de liaison entre les ponts constituent des éléments de connexion rigide 8 aptes à être introduits dans les ouvertures des bornes correspondantes des appareils, à la manière de dents de peigne. Sur la figure 5, une zone de plus grande fragilité z a été réalisée au niveau de la ligne de pliage de chaque partie dénudée 4 de câble avant la réalisation du compactage illustré sur la figure 6, cette zone de fragilité pouvant être constituée dans cette réalisation particulière, par exemple par une section amincie réalisée au niveau de cette zone de pliage.

Sur la figure 7, l'utilisateur déplie une première fois l'un 9 des ponts qu'il souhaite détacher de l'ensemble afin de réaliser deux segments, à savoir sur cette figure, un premier segment 10 constitué de trois ponts situés à gauche, et un second segment 11 constitué de quatre ponts situés à droite.

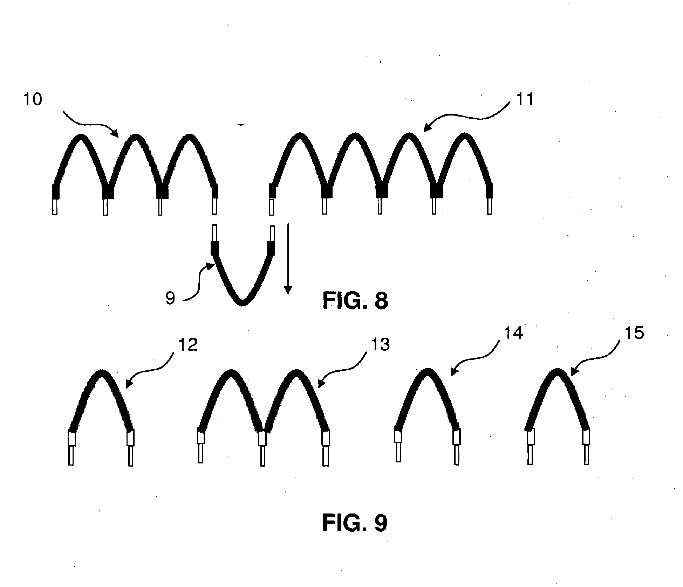

Afin de réaliser le détachement de ce pont tel qu'illustré sur la figure 8, plusieurs pliages et dépliages successifs sont réalisés.

La figure 9 illustre un dispositif de raccordement constitué de quatre segments 12, 13, 14, 15 comportant respectivement un pont, deux ponts, un pont et un pont.

Ainsi, selon la réalisation illustrée sur ces figures 5 à 9, le câble est réalisé en un fil souple, d'où il résulte qu'il est nécessaire de réaliser un compactage au niveau des extrémités dénudées des ponts, afin de réaliser des éléments de connexion rigide.

Cette solution décrite sur ces figures pourrait également être réalisée au moyen d'un fil semi-rigide. Dans ce cas, un compactage au niveau des portions dénudées ne serait pas nécessaire, compte-tenu du fait que la superposition de deux portions dénudées en regard appartenant à deux ponts successifs, formerait entre deux ponts successifs un élément de connexion rigide apte à être introduit dans une borne.

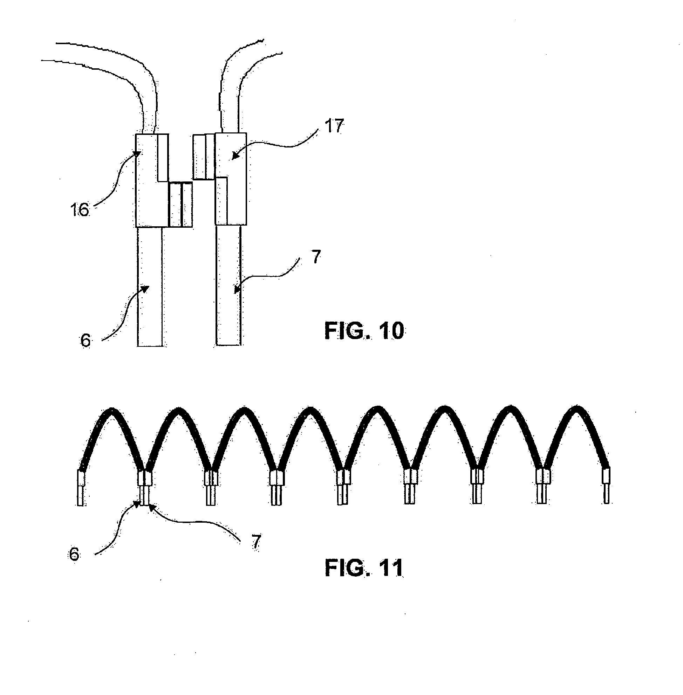

Une autre réalisation aurait pu consister en utilisant un conducteur souple ou semi-rigide tel un câble, une tresse, ou autres, à sectionner la partie dénudée entre deux ponts de manière à séparer les deux ponts, et à fixer ces portions chacune sur un élément de connexion 16,17, les deux éléments de connexion pouvant être fixés de manière amovible l'un à l'autre par exemple par un clipsage de manière à pouvoir réunir ou séparer les ponts facilement, cette réalisation étant illustrée sur la figure 10. Ces éléments de connexion 16,17 pourront être fixés auxdites portions 6,7 par exemple par soudure ou sertissage par exemple. On notera que le sectionnement préalable de la partie dénudée n'est pas indispensable et qu'on pourrait également envisager de prévoir une zone de fragilisation au niveau de la ligne de pliage et de fixer les portions dénudées en regard chacune sur un élément de connexion tel que précédemment décrit.

On a donc réalisé selon l'invention, un peigne préfabriqué souple, de longueur standard, sécable sans outil de manière à lui conférer la longueur souhaitée, ce peigne étant destiné à être utilisé pour alimenter des appareils modulaires, et dont la mise en place dans les bornes de plusieurs appareils modulaires disposés sur un rail DIN, est indépendante de la qualité de l'alignement des bornes de ces appareils.

Ces peignes pourront être utilisés pour des faibles courants ou bien de forts courants (correspondant à un conducteur d'une section de 16mm²). Dans le cas de l'utilisation de conducteurs de forte section, il pourra avantageusement être envisagé de prolonger les éléments de connexion formés entre deux ponts successifs par des éléments de connexion présentant une plus petite section, adaptés pour le raccordement aux bornes.

Lors de l'utilisation de ce peigne, le câbleur peut positionner sans outil les dents du peigne dans l'axe des bornes quelque soit l'écart de celles-ci par rapport à un alignement parfait.

Les dents du peigne sont mobiles entre elles selon au moins deux degrés de liberté.

Le raccordement est plus rapide que lors de l'utilisation de ponts en fils individuels souples car il n'y a pas d'embout à enfiler sur les connexions.

L'insertion dans les bornes prend moins de temps qu'avec les peignes rigides, car dans la plus part des cas, les bornes des appareils modulaires n'étant pas parfaitement alignées, la rigidité des peignes crée des contraintes mécaniques afin de parvenir à faire entrer les dents dans les bornes lorsqu'il y a un grand nombre d'appareils modulaires sur un même rail DIN, en particulier lorsque ces derniers ne sont pas dans la même référence.

Ces ponts sont préfabriqués donc prêts à l'emploi, et étant reliés ensemble, ils sont repositionnés en un geste au-dessus des bornes.

Parmi autres avantages, la géométrie variable des ponts permet de sauter une borne sans avoir besoin de couper une dent comme ceci est le cas avec des peignes rigides.

En outre, la préfabrication est simple car l'ensemble des ponts peut être fabriqué sur une très grande longueur, puis être livré enroulé, ce qui réduit les coûts de logistique.

On outre, il n'est pas nécessaire de prévoir d'accessoires pour isoler les parties coupées.

On notera également que le pliage pourra être réalisé à chaud ou à froid, et le compactage pourra être direct sans ajout de matière.

Le compactage et le pliage pourront être réalisés par exemple, sur un aller, pour le compactage, et un retour de l'outil, pour le pliage.

On notera également que ce dispositif peut présenter différentes sections, longueurs et couleurs.

De plus, il est possible d'ajouter des bagues de repérage en automatique.

Bien entendu, l'invention n'est pas limitée aux modes de réalisation décrits et illustrés qui n'ont été donnés qu'à titre d'exemple.

## Revendications

1. Procédé de fabrication d'un dispositif de raccordement électrique des bornes appartenant à des appareils modulaires montés sur un support de montage,
comprenant les étapes consistant à :
- prendre une longueur prédéterminée dite première d'un conducteur souple ou semi-rigide (2),
- puis à créer intervalles réguliers le long de ce conducteur souple ou semi-rigide, des parties dénudées (4) présentant une certaine longueur dite seconde, **caractérisé en ce qu'**il consiste en outre à réaliser un pliage dudit conducteur en des zones correspondant sensiblement au milieu (m) des parties dénudées (4) en superposant les deux portions (6,7) situées de part et d'autre de chaque zone de pliage (m) de manière à former une succession de ponts (5),
- puis à solidariser mécaniquement de manière amovible et relier électriquement lès deux portions en regard (6,7) situées de part et d'autre de chaque zone de pliage (m) de manière à former des éléments de connexion (8) aptes à être introduits chacun dans une borne des appareils de manière à réaliser le raccordement électrique de tous les appareils entre eux.

2. Procédé de fabrication selon la revendication 1, **caractérisé en ce que** l'on désolidarise ensuite au moins une fois, sur la longueur du dispositif, deux portions en regard (6,7) situées de part et d'autre de la zone de pliage (m) située entre deux ponts (5), de manière à réaliser plusieurs segments (10,11,12,13,14,15) constitués chacun d'un ou plusieurs ponts, le nombre de ponts correspondant pour chaque segment au nombre d'appareils à relier.

3. Procédé de fabrication selon la revendication 2, **caractérisé en ce que** la désolidarisation mécanique précitée est réalisée par l'intermédiaire de moyens de désolidarisation (z) actionnables manuellement.

4. Procédé de fabrication selon l'une quelconque des revendications précédentes, **caractérisé en ce que** les portions en regard (6,7) associées à chaque zone de pliage (m), sont fixées à un élément de connexion (16,17), les deux éléments de connexion en regard de deux ponts successifs étant fixés l'un à l'autre de manière amovible et reliés électriquement.

5. Procédé de fabrication selon la revendication 4, **caractérisé en ce que** les deux éléments de connexion précités (16,17) sont fixés l'un à l'autre par clipsage ou bien encastrement.

6. Procédé de fabrication selon la revendication 4 ou 5, **caractérisé en ce que** les portions en regard (6,7) associées à chaque zone de pliage (m) sont fixées à l'élément de connexion correspondant (16,17) par soudure ou sertissage.

7. Procédé de fabrication selon l'une quelconque des revendications précédentes, **caractérisé en ce que** le conducteur précité est réalisé en un fil semi-rigide, et **en ce que** le pliage des parties dénudées (4) suivie de la superposition des portions dénudées (6,7) situées de part et d'autre de la zone de pliage (m), permet de former au niveau de chaque zone de pliage, un élément de connexion rigide (8).

8. Procédé de fabrication selon l'une quelconque des revendications précédentes, **caractérisé en ce que** le conducteur semi-rigide précité est un fil de cuivre monobrin.

9. Procédé de fabrication selon l'une quelconque des revendications 1 à 6, **caractérisé en ce que** le conducteur précité est un conducteur souple, et **en ce qu'**après la création des parties dénudées (4), celles-ci sont compactées sensiblement perpendiculairement à leur direction longitudinale de manière à former, après le pliage destiné à former des ponts, des éléments de connexion rigide (8).

10. Procédé de fabrication selon l'une quelconque des revendications précédentes, **caractérisé en ce que** les parties dénudées précitées (4) sont sécables manuellement.

11. Procédé de fabrication selon la revendication 10, **caractérisé en ce que** ces parties dénudées (4) comportent sensiblement au niveau de la zone de pliage (m), une zone fragilisée (z) apte à faciliter la section par l'utilisateur, l'utilisateur procédant tout d'abord à un premier dépliage, suivi de plusieurs pliages et dépliages successifs jusqu'à la section du conducteur au niveau de la zone fragilisée (z).

12. Procédé de fabrication selon la revendication 11, **caractérisé en ce que** le conducteur précité est réalisé à partir d'un fil souple, et **en ce que** cette zone fragilisée (z) est réalisée par une diminution de la section du conducteur au voisinage de la zone de pliage (m) de la partie dénudée (4).

13. Procédé de fabrication selon la revendication 11, **caractérisé en ce que** le conducteur précité est réalisé à partir d'un fil semi-rigide, et **en ce que** cette zone fragilisée (z) est constituée par une entaille réalisée sensiblement au niveau de la zone de pliage (m) de la partie dénudée (4).

14. Procédé de fabrication selon l'une quelconque des revendications précédentes, **caractérisé en ce que** le conducteur précité est un câble ou une tresse (2).

15. Dispositif de raccordement électrique des bornes appartenant à des appareils modulaires montés sur un support de montage, **caractérisé en ce qu'**il est fabriqué par un procédé de fabrication selon l'une quelconque des revendications 1 à 14.

16. Ensemble d'appareils de protection électriques modulaires montés sur un support de montage, **caractérisé en ce que** ces appareils sont raccordés électriquement au moyen d'un dispositif de raccordement selon la revendication 15.

## Patentansprüche

1. Verfahren zur Herstellung einer elektrischen Verbindungsanordnung der auf einem Montageträger montierten modularen Geräten zugehörigen Anschlüsse, welches die Schritte ausweist bestehend aus:
- Nehmen einer so genannten ersten vorgegebenen Länge einer flexiblen oder einer halbsteifen Leitung (2),
- dann in regelmäßigen Abständen entlang dieser flexiblen oder halbsteifen Leitung abisolierte Abschnitten (4) bilden, welche eine so genannte zweite bestimmte Länge aufweisen,
**dadurch gekennzeichnet, dass** es außerdem darin besteht, eine Faltung der Leitung in Zonen vorzunehmen, welche im Wesentlichen der Mitte (m) der abisolierten Abschnitte (4) entsprechen, indem die beiden Abschnitte (6,7), welche beiderseits der Faltungszone (m) liegen, derartig übereinander gelegt werden, dass eine Abfolge von Brücken (5) gebildet wird,
- dann in lösbarer Weise die beiden gegenüber liegenden Abschnitte (6,7), welche beiderseits jeder Faltungszone (m) angeordnet sind, derartig mechanisch fest und elektrisch zu verbinden, dass Verbindungselemente (8) gebildet werden, welche geeignet sind, um jeweils in einen Anschluss der Geräte derartig eingeführt zu werden, dass die elektrische Verbindung aller Geräte untereinander ausgeführt wird.

2. Herstellungsverfahren nach Anspruch 1, **dadurch gekennzeichnet, dass** anschließend mindestens ein Mal über die Länge der Vorrichtung zwei gegenüber liegende Abschnitte (6,7), welche beiderseits der zwischen zwei Brücken (5) angeordneten Faltungszone (m) angeordnet sind, derartig getrennt werden, dass mehrere Segmente (10,11,12,13,14,15) hergestellt werden, welche jeweils von einer oder mehreren Brücken gebildet werden, wobei die Zahl der Brücken für jedes Segment der Zahl der zu verbindenden Geräte entspricht.

3. Herstellungsverfahren nach Anspruch 2, **dadurch gekennzeichnet, dass** die vorgenannte mechanische Trennung mit Hilfe von manuell betätigbaren Trennmitteln (z) durchgeführt wird.

4. Herstellungsverfahren nach einem der vorhergehenden Ansprüche, **dadurch gekennzeichnet, dass** die gegenüber liegenden Abschnitte (6,7), welche jeder Faltungszone (m) zugeordnet sind, an einem Verbindungselement (16,17) befestigt sind, wobei die beiden Verbindungselemente, welche an zwei aufeinander folgenden Brücken gegenüber liegen, miteinander trennbar befestigt und elektrisch verbunden werden.

5. Herstellungsverfahren nach Anspruch 4, **dadurch gekennzeichnet, dass** die vorgenannten beiden Verbindungselemente (16,17) durch Einrasten oder auch Einfügen miteinander befestigt werden.

6. Herstellungsverfahren nach Ansprüche 4 oder 5, **dadurch gekennzeichnet, dass** die gegenüber liegenden Abschnitte (6, 7), welche jeder Faltungszone (m) zugeordnet sind, an dem entsprechenden Verbindungselement (16,17) durch Löten oder Crimpen befestigt werden.

7. Herstellungsverfahren nach einem der vorhergehenden Ansprüche, **dadurch gekennzeichnet, dass** die vorgenannte Leitung aus einem halbsteifen Draht ausgeführt wird, und dass das Falten der abisolierten Abschnitte (4), welches vom Übereinanderlegen der abisolierten Abschnitte (6,7) gefolgt wird, es ermöglicht, im Bereich jeder Faltungszone (m) ein Element mit starrer Verbindung (8) zu bilden.

8. Herstellungsverfahren nach einem der vorhergehenden Ansprüche, **dadurch gekennzeichnet, dass** die vorgenannte halbsteife Leitung ein einzelner Kupferdraht ist.

9. Herstellungsverfahren nach einem der Ansprüche 1 bis 6, **dadurch gekennzeichnet, dass** die vorgenannte Leitung eine flexible Leitung ist, und dass nach dem Bilden der abisolierten Abschnitte (4) diese im Wesentlichen senkrecht zu ihrer Längsrichtung derartig verdichtet werden, dass nach dem Falten, welches vorgesehen ist, um Brücken zu bilden, Elemente mit starrer Verbindung (8) gebildet werden.

10. Herstellungsverfahren nach einem der vorhergehenden Ansprüche, **dadurch gekennzeichnet, dass** die vorgenannten abisolierten Abschnitte (4) manuell trennbar sind.

11. Herstellungsverfahren nach Anspruch 10, **dadurch gekennzeichnet, dass** diese abisolierten Abschnitte (4) im Wesentlichen im Bereich der Faltungszone (m) eine versprödete Zone (z) aufweisen, welche geeignet ist, das Trennen durch den Benutzer zu erleichtern, wobei der Benutzer zunächst ein erstes Entfalten durchführt, welches bis zum Trennen der Leitung im Bereich der versprödeten Zone (z) von mehrfachem aufeinander folgendem Falten und Entfalten gefolgt wird.

12. Herstellungsverfahren nach Anspruch 11, **dadurch gekennzeichnet, dass** die vorgenannte Leitung aus einem flexiblen Draht hergestellt wird, und dass diese versprödete Zone (z) durch eine Verringerung des Querschnitts der Leitung in der Nähe der Faltungszone (m) des abisolierten Abschnitts (4) ausgeführt wird.

13. Herstellungsverfahren nach Anspruch 11, **dadurch gekennzeichnet, dass** die vorgenannte Leitung ausgehend von einem flexiblen Draht hergestellt wird, und dass diese versprödete Zone (z) durch einen im Wesentlichen im Bereich der Faltungszone (m) des abisolierten Abschnitts (4) ausgeführten Einschnitt gebildet wird.

14. Herstellungsverfahren nach einem der vorhergehenden Ansprüche, **dadurch gekennzeichnet, dass** die vorgenannte Leitung ein Kabel oder eine Litze (2) ist.

15. Elektrische Verbindungsanordnung der auf einem Montageträger montierten modularen Geräten zugehörigen Anschlüsse, **dadurch gekennzeichnet, dass** sie durch ein Herstellungsverfahren nach einem der vorhergehenden Ansprüche 1 bis 14 hergestellt ist.

16. Einheit von modularen, elektrischen Schutzgeräten, welche auf einem Montageträger montiert sind, **dadurch gekennzeichnet, dass** diese Geräte mittels einer Verbindungsanordnung nach Anspruch 15 elektrisch verbunden sind.

## Claims

1. Method of manufacturing a device for electrically connecting terminals of modular devices mounted on a mounting support,
comprising the steps consisting in:
- taking a predetermined so-called first length of a flexible or semi-rigid conductor (2),
- then creating at regular intervals along this flexible or semi-rigid conductor stripped portions (4) having a certain, so-called second length,
**characterized in that** it further consists in bending said conductor in areas substantially corresponding to the middle (m) of the stripped portions (4) and superposing the two portions (6, 7) situated on respective opposite sides of each bending area (m) so as to form a succession of bridges (5),
- then removably mechanically fastening together and electrically connecting the two facing portions (6, 7) situated on respective opposite sides of each bending area (m) so as to form connection elements (8) each adapted to be inserted in a terminal of the devices so as to make the electrical connection of all the devices to one another.

2. Method of manufacture according to Claim 1, **characterized in that**, over the length of the device, there are then unfastened at least once two facing portions (6, 7) situated on respective opposite sides of the bending area (m) situated between two bridges (5) so as to produce a plurality of segments (10, 11, 12, 13, 14, 15) each consisting of one or more bridges, the number of bridges in each segment corresponding to the number of devices to be connected.

3. Method of manufacture according to Claim 2, **characterized in that** the aforementioned mechanical unfastening is effected by means of unfastening means (z) that can be actuated manually.

4. Method of manufacture according to any one of the preceding claims, **characterized in that** the facing portions (6, 7) associated with each bending area (m) are fixed to a connection element (16, 17), the two facing connection elements of two successive bridges being removably fixed to each other and electrically connected.

5. Method of manufacture according to Claim 4, **characterized in that** the aforementioned two connection elements (16, 17) are fixed to each other by clipping or nesting.

6. Method of manufacture according to Claim 4 or 5, **characterized in that** the facing portions (6, 7) associated with each bending area (m) are soldered or crimped to the corresponding connection element (16, 17).

7. Method of manufacture according to any one of the preceding claims, **characterized in that** the aforementioned conductor is made from a semi-rigid wire and **in that** the bending of the stripped portions (4) followed by the superposition of the stripped portions (6, 7) situated on respective opposite sides of the bending area (m) enable a rigid connection element (8) to be formed in each bending area.

8. Method of manufacture according to any one of the preceding claims, characterized that the aforementioned semi-rigid conductor is a solid-core copper wire.

9. Method of manufacture according to any one of Claims 1 to 6, **characterized in that** the aforementioned conductor is a flexible conductor and **in that** after the stripped portions (4) are created they are compacted substantially perpendicularly to their longitudinal direction so as to form rigid connection elements (8) after the bending intended to form bridges.

10. Method of manufacture according to any one of the preceding claims, **characterized in that** the aforementioned stripped portions (4) can be cut manually.

11. Method of manufacture according to Claim 10, **characterized in that** the stripped portions (4) include substantially in the bending area (m) a weakened area (z) adapted to facilitate breaking by the user, the user first proceeding to a first unbending followed by a plurality of successive bendings and unbendings until the conductor breaks in the weakened area (z).

12. Method of manufacture according to Claim 11, **characterized in that** the aforementioned conductor is made from a flexible wire and **in that** this weakened area (z) is produced by reducing the section of the conductor in the vicinity of the bending area (m) of the stripped portion (4).

13. Method of manufacture according to Claim 11, **characterized in that** the aforementioned conductor is made from a semi-rigid wire and **in that** this weakened area (z) consists of a notch produced substantially in the bending area (m) of the stripped portion (4).

14. Method of manufacture according to any one of the preceding claims, **characterized in that** the aforementioned conductor is a cable or a braid (2).

15. Device for electrically connecting terminals of modular devices mounted on a mounted support, **characterized in that** it is manufactured by a method of manufacture according to any one of Claims 1 to 14.

16. Set of modular electrical protection devices mounted on a mounting support, **characterized in that** these devices are electrically connected by means of a connection device according to Claim 15.
